# EUROPÄISCHE PATENTSCHRIFT

(11) **EP 3 000 520 B1**
(45) Veröffentlichungstag und Bekanntmachung des Hinweises auf die Patenterteilung: **14.06.2017**
(21) Anmeldenummer: 15002505.4
(22) Anmeldetag: 24.08.2015
(51) Int. Cl.: B01D 46/00

(54) **FILTEREINSATZ**
FILTER INSERT
INSERT DE FILTRE

(30) Priorität: 15.09.2014 AT 506442014
(43) Veröffentlichungstag der Anmeldung: 30.03.2016
(73) Patentinhaber: GE Jenbacher GmbH & Co OG, 6200 Jenbach (AT)
(72) Erfinder: Wall, Günther, 6323 Bad Häring (AT)
(74) Vertreter: Torggler & Hofinger Patentanwälte

(56) Entgegenhaltungen:
- EP-A1- 2 700 438
- DE-A1- 10 239 408
- DE-A1-102013 111 149
- US-A- 4 160 684

## Beschreibung

Die Erfindung betrifft einen Filtereinsatz zum Abscheiden von flüssigen Partikeln aus einem Gasstrom mit den Merkmalen des Oberbegriffs von Anspruch 1, eine Filtereinrichtung mit einem solchen Filtereinsatz sowie die Verwendung für eine Brennkraftmaschine.

Eine in der Technik häufige Aufgabe ist das Abscheiden von Flüssigkeitströpfchen aus einem Gasstrom.

Die dazu verwendeten Abscheideeinrichtungen sind häufig so aufgebaut, dass in einem Gehäuse ein meist zylindrischer Filtereinsatz (eine Filterkartusche) eingesetzt ist, der vom zu reinigenden Gasstrom radial durchströmt wird. Die Durchströmung kann dabei von der Mantelfläche nach innen oder umgekehrt erfolgen. Ein typischer Filtereinsatz umfasst ein Medienpaket (ein Paket von Filtermedien), welches durch Befestigungsabschnitte an den Deckelflächen gefasst ist.

Die in einem Filtereinsatz eingesetzten Filtermedien müssen zwei Hauptaufgaben erfüllen:
- Das Abscheiden der mitgeführten Flüssigkeit durch verschiedene Filtermechanismen, vorwiegend Tiefenfiltration und Koaleszenz
- Kontinuierliches Abführen von Flüssigkeit vom Filtermedium, um eine geringe Sättigung des Filtermediums und damit einen geringen Gegendruck des Filters aufrecht zu erhalten

Das übliche Filterdesign besteht in einem Aufbau eines oder mehrerer unterschiedlicher Filtermedien, mit geeigneten Medieneigenschaften wie Faserdurchmesser, Porosität und Oberflächenenergie. In der Regel ist die Grobabscheidung in Strömungsrichtung vor einer Feinabscheidung angeordnet.

Die Auslegung eines Filters erfolgt unter Berücksichtigung der Anforderungen an Abscheidegrad, Flüssigkeitsdrainage und akzeptablen Gegendruck.

Filtermedien für die Feinabscheidung werden insbesondere für hohe Abscheidegrade benötigt. Typischerweise sind die Filtermedien zur Feinabscheidung durch einen geringen Faserdurchmesser und geringe Porengröße gekennzeichnet.
Nachteilig daran ist, dass aufgenommene Flüssigkeit, beispielsweise Öl, unter üblichen Betriebsbedingungen aus dem Filtermedium zur Feinabscheidung nicht ausreichend abtransportiert wird, wodurch sich im Betrieb ein hoher Strömungswiderstand einstellt.

Um die Sättigung der Filtermedien mit abgeschiedener Flüssigkeit möglichst gering zu halten, gibt es Bestrebungen, die Drainage aus den Filtermedien (Medien zur Grobabscheidung und zur Feinabscheidung) in Richtung der Gasströmung zu verbessern.

Die AT 512506 B1 (EP 2700438 A1) zeigt eine Filtereinrichtung zur Abscheidung von Tröpfchen aus gasförmigen Stoffströmen, wobei an der Eintrittsfläche der Filterlage eine Strömungsbarriere vorgesehen ist, welche den an die Drainageschicht angrenzenden Bereich der Eintrittsfläche teilweise abdeckt und die eintrittsseitige Stirnfläche der Drainageschicht im Wesentlich vollständig abdeckt.

Die DE 102013111149 A1 zeigt ein Filtersystem zur Abscheidung von flüssigen, in Tröpfchen- oder in Nebelform vorliegenden, Begleitstoffen aus einem gasförmigen Stoff. Hierbei strömt ein gasförmiger Stoffstrom durch den Einlass auf die zumindest zwei Filtereinsätze, welche voneinander durch eine Barriere getrennt sind, um den Stoffstrom zu lenken. Des Weiteren wird angeführt, dass Drainageelemente vorgesehen sein können, welche die flüssigen Begleitstoffe aus den Filterlagen fördern können.

Die DE 202005004151 U1 beschreibt ein Filterelement, bei dem eine gesammelte Flüssigkeit durch die Schwerkraft über einen unteren Rand eines Abstandgewirkes ausfließen und anschließend gesammelt werden kann.

Die DE 69909284 T2 beschreibt Verbesserungen an einem Koaleszenzfilter. Gemäß dieser Schrift weist der Filter eine erste Ölkoaleszenzschicht aus einem Mikrofasermaterial und eine zweite Schicht aus einem Ölablaufmaterial auf, wobei eine Ablaufschicht der Aufnahme des Öls aus einer Koaleszenzschicht dient und dem Öl einen Weg bietet, aufgrund der Schwerkraft aus dem Filter zu fließen.

Die US 2010/031940 A1 und die DE 10239408 A1 zeigen eine Filtervorrichtung zur Filterung von Blow-By-Gas mit axialer Drainage und Abdichtung.

Die US 4,160,684 A zeigt einen Koaleszenzfilter zur Abscheidung von Öl. Als Einsatzgebiet wird in diesem Dokument ein Luftkompressor angegeben, um Öl aus komprimierter Luft abzuscheiden. Hierbei strömt komprimierte Luft zur Vor- bzw. Grobabscheidung an einen ersten Filterabschnitt an der Mantelfläche. Nach Durchlauf dieses Vor- bzw. Grobabscheiders gelangt die komprimierte Luft an ein weiteres Filterelement mit mehreren Lagen, welches beabstandet vom ersten Vor- bzw. Grobabscheider angeordnet ist. Durch diese Filterelemente wird eine Feinabscheidung durchgeführt. Ebenfalls ist eine Drainageschicht zur Abführung des Öls angeführt.

Die US 8,499,749 B2 zeigt einen Filter für ein Blow-By-Gas einer Kurbelgehäuseentlüftung, bei dem im Bodenabschnitt des Filtereinsatzes Drainagelöcher für die abgeschiedene Flüssigkeit vorgesehen sind. Der Nachteil dieser Lösung ist allerdings, dass unvermeidlich ein Bypass von Gas durch die Drainageöffnungen erfolgt. Mit Bypass ist hier gemeint, dass Gas durch die Drainageöffnungen entweichen kann und somit nicht alle Filterlagen durchströmt.

Aufgabe der vorliegenden Erfindung ist es daher, einen Filtereinsatz anzugeben, der gute Flüssigkeitsdrainage besitzt ohne die Nachteile des Stands der Technik aufzuweisen. Ebenfalls soll eine Filtereinrichtung unter Verwendung eines solchen Filtereinsatzes angegeben werden, sowie eine Brennkraftmaschine mit einem solchen Filter.

Gelöst wird die Aufgabe durch einen Filtereinsatz mit den Merkmalen von Anspruch 1 bzw. durch eine Filtereinrichtung nach Anspruch 10 sowie die Verwendung für eine Brennkraftmaschine nach Anspruch 13. Bevorzugte Ausführungsformen sind in den abhängigen Ansprüchen angegeben.

Dadurch, dass zwischen einem Filtermedium zur Feinabscheidung des Medienpakets und dem Boden des Filtereinsatzes, oder innerhalb des Medienpakets eine sich über den Radius des Filtereinsatzes erstreckende Passage für die Flüssigkeit vorgesehen ist, wird also erreicht, dass die drainierte Flüssigkeit leicht aus dem Filterelement austreten kann.
Passage bedeutet, dass ein Strömungspfad geschaffen wird, der weitgehend oder vollständig frei von Filtermedien ist. Dadurch kann die Flüssigkeit wesentlich leichter abfließen und führt so nicht zu den oben erläuterten Problemen mit Sättigung der Filtermedien und dem damit verbundenen erhöhten Strömungswiderstand des Filtereinsatzes.

Die Formulierung "über den Radius erstreckend" ist auf die meist zylindrische Grundform des Filtereinsatzes bezogen. Es soll im Rahmen dieser Anmeldung so verstanden werden, dass die Passage einen durchgehenden Strömungspfad in Richtung der vorherrschenden Flüssigkeitsabflussrichtung aufweist. Selbstverständlich ist die Erfindung auch auf andere Formen als eine zylindrische Form anwendbar. Die Passage kann durchaus auch tangentiale Richtungskomponenten aufweisen. Die Passage kann als zylindrischer Spaltraum oder in Form einzelner Kanäle ausgebildet sein.

Bevorzugt kann vorgesehen sein, dass das Medienpaket wenigstens einen Feinfilter beinhaltet.

Weiters kann bevorzugt vorgesehen sein, dass die Passage weitgehend oder vollständig frei von Feinfilter ist, da die zur Feinabscheidung unerlässlichen Feinfilter der zu drainierenden Flüssigkeit einen besonders hohen Strömungswiderstand entgegensetzen.

Erfindungsgemäß ist vorgesehen, dass das Medienpaket wenigstens eine Schicht mit Kapillareffekt vor und nach der Passage aufweist.

Der besondere Vorteil des Vorhandenseins einer Schicht mit Kapillareffekt liegt darin, dass diese nach Sättigung mit Flüssigkeit gasdicht aber für Flüssigkeit durchlässig (flüssigkeitsoffen) ist. Damit wird das Medienpaket in jenen Bereichen, die durch den Kapillareffekt von Flüssigkeit getränkt sind, weitgehend gasdicht verschlossen. Für Filtermedien mit Kapillareffekt werden gegenüber der Flüssigkeit, beispielsweise Öl, benetzbare Werkstoffe ausgewählt. Die Auswahl erfolgt in Abhängigkeit der Oberflächen- bzw. Grenzflächenspannung der Flüssigkeit gegenüber dem Filtermedium.

Es hat sich als besonders günstig herausgestellt, wenn das Filtermedium mit Kapillareffekt so abgestimmt ist, dass die Flüssigkeit darin eine Steighöhe von 2 bis 10 cm, vorzugsweise 2 bis 5 cm erreicht. Die Steighöhe kann einfach experimentell bestimmt werden. Im benetzten Zustand bilden Filtermedien mit Kapillareffekt eine flüssigkeitsoffene, d. h. von Flüssigkeit, beispielsweise Öl durchströmbare, jedoch bei üblichen Betriebsbedingungen (beispielsweise 20 mbar bis 50 mbar Filterdifferenzdruck) weitgehend gasdichte Schicht.

Bevorzugt ist vorgesehen, dass die Schicht mit Kapillareffekt so ausgebildet ist, dass sie das Medienpaket, vorzugsweise auf der An- und Abströmseite des Gases, abschnittsweise gasdicht verschließt. Im Betrieb saugt die Schicht mit Kapillareffekt durch den Kapillareffekt Flüssigkeit aus der sich am Boden sammelnden Flüssigkeit auf, wodurch die Schicht bis zur Steighöhe gasdicht wird.

Damit wird erreicht, dass das Medienpaket bis zu einer bestimmten Höhe für die üblichen betrieblichen Differenzdrücke (bis ca. 50 mbar, vorzugsweise bis 20 mbar) weitgehend gasdicht verschlossen ist. Durch den gasdichten Abschnitt kann durch die oben beschriebene Passage kein Gas aus dem Medienpaket gedrückt werden, ohne dass dieses die zur Filterung vorgesehenen Schichten des Medienpakets durchströmt.

Man kann den Effekt mit einem Siphon vergleichen, der die abfließende Flüssigkeit durchlässt, aber das Gas durch die von der Flüssigkeit nicht gesättigten Bereiche des Medienpakets lenkt.

Die Erfindung macht sich die Erkenntnis zunutze, dass durch Sättigung bestimmter Filtermedien mit Flüssigkeit eine gasdichte aber für Flüssigkeit durchlässige (flüssigkeitsoffene) Schicht entsteht. Durch diese Schicht kann weiterhin Flüssigkeit abtransportiert werden.

Filtermedien zur Feinabscheidung (Feinfilter) setzen allerdings bei Sättigung durch Flüssigkeit der abfließenden Flüssigkeit einen sehr hohen Strömungswiderstand entgegen. Daher ist bevorzugt vorgesehen, dass ein im Medienpaket gegebenenfalls angeordneter Feinfilter sich nicht über die gesamte Länge der Filtereinrichtung erstreckt, d.h. dass der Filterabschnitt zur Feinabscheidung kürzer ausgebildet ist als die übrigen Filtermedien im Medienpaket. Mit Länge der Filtereinrichtung ist jene Erstreckung gemeint, die normal zur Hauptdurchströmungsrichtung des Gasstromes liegt.

Damit ergibt sich eine Passage innerhalb des Medienpakets, die frei von Filtermedien zur Feinabscheidung ist. Durch die Passage wird erreicht, dass das Filtermedium zur Feinabscheidung weitgehend unbeeinträchtigt von dem im Betrieb entstehenden Flüssigkeitspegel bleibt.

Dies ist deswegen von Bedeutung, weil das Filtermedium zur Feinabscheidung im von Flüssigkeit getränkten Zustand einen besonders hohen Strömungswiderstand aufweist.

Bevorzugt kann vorgesehen sein, dass die Schicht mit dem Kapillar-Effekt als Drainage-Material oder als Abscheide-Medium ausgebildet ist.

Es kann auch vorgesehen sein, dass der Filterabschnitt zur Feinabscheidung im Betrieb bis in den entstehenden Flüssigkeitspegel reicht. Das Filtermedium mit Kapillareffekt dient hier als Gas-Sperre und verhindert, dass der Zwischenraum zwischen Filtermedium zur Feinabscheidung und Kleber durchströmt wird.

Die Höhe der Passage liegt vorzugsweise im Bereich nicht größer als zwischen 2 bis 0,5% der Höhe des Filtereinsatzes. Damit wird ein besonders guter Kompromiss aus Drainagewirkung und Abscheideleistung erzielt.

Für gängige Filterabmessungen, im speziellen für Filtereinätze zur Ölnebelabscheidung bei Stationärmotoren, weist die Passage besonders bevorzugt eine Höhe von 5 mm bis 20 mm auf.

Bevorzugt kann vorgesehen sein, dass mehrere Lagen an Filtermedium mit Kapillareffekt innerhalb des Medienpaketes, insbesondere innerhalb der Anordnung an Filtermedium zur Feinabscheidung, sowie in Strömungsrichtung des Gases vor und nach der Anordnung an Filtermedium zur Feinabscheidung angeordnet sind. In anderen Worten befinden sich Lagen mit Kapillareffekt sowohl innerhalb des Abschnittes zur Feinabscheidung als auch stromaufwärts und stromabwärts davon. Somit ist der Abschnitt zur Feinabscheidung bevorzugt von Lagen mit Kapillareffekt "eingepackt".

Der Filtereinsatz kann unterschiedliche Formen aufweisen: geeignet ist beispielsweise eine zylindrische Geometrie. In diesem Fall werden die Lagen von Filtermedien typischerweise gewickelt, können aber auch geschichtet sein. Im Falle einer quaderförmigen Gestalt sind die Filterlagen geschichtet. Die weiter oben für zylindrische Geometrien gemachten Erläuterungen zur Orientierung der Passage gelten sinngemäß auch für andere Bauformen. Was mit "radial" für eine zylindrische Geometrie bezeichnet wurde, ist für eine Quaderform gedanklich durch "in Strömungsrichtung" zu ersetzen.

Der beschriebene Filtereinsatz eignet sich besonders zum Abscheiden und Abführen von Öltröpfchen aus einem mit Ölnebel beladenen Gas, etwa einem Blow-By-Gas einer Kurbelgehäuseentlüftung einer Brennkraftmaschine. Dazu wird der Filtereinsatz typischerweise austauschbar in eine Filtereinrichtung verbaut.

Die Erfindung wird im Folgenden durch die Figuren näher erläutert.
Dabei zeigt:
- Fig. 1: eine schematische Darstellung eines Filtereinsatzes im Querschnitt
- Fig. 2: eine schematische Darstellung eines Filtereinsatzes im Querschnitt in einer alternativen Ausführungsform
- Fig. 3: eine schematische Darstellung eines Filtereinsatzes im Querschnitt in einer weiteren alternativen Ausführungsform
- Fig. 4: eine schematische Darstellung eines Filterelementes
- Fig. 5: den Boden eines Filterelementes
- Fig. 6: eine Brennkraftmaschine mit Filtereinrichtung

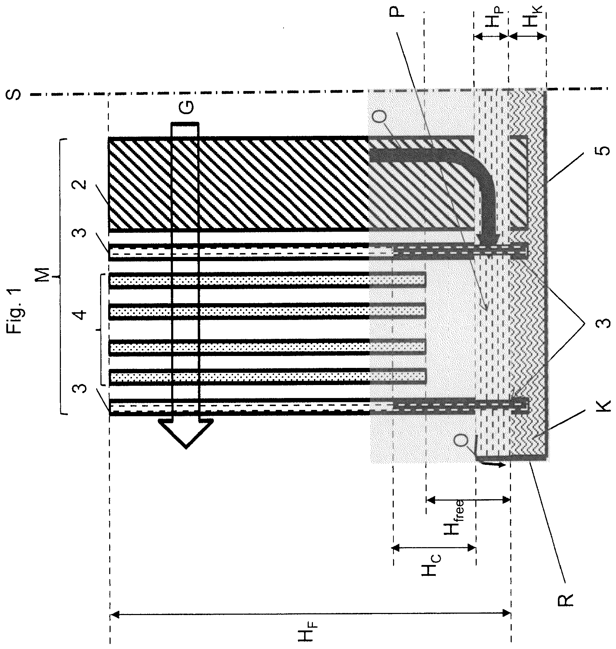

Figur 1 zeigt ein Ausführungsbeispiel für einen Filtereinsatz 1 zum Abscheiden von flüssigen Schwebeteilchen aus einem Gasstrom G, insbesondere zum Abscheiden von Flüssigkeitströpfchen aus einem Aerosol-führenden Gas. Der in Figur 1 gezeigte Filtereinsatz 1 ist zylindrisch ausgebildet. Die Symmetrie ist durch die Symmetrieachse S gekennzeichnet. Daher ist lediglich die linke Hälfte des rotationssymmetrischen Aufbaus im Querschnitt dargestellt.

In der Anordnung zu erkennen sind Schichten mit unterschiedlichen Filtermedien, die zusammen das Medienpaket M ergeben.

Der Filtereinsatz 1 weist die Höhe H_{F} auf.

Das Gas bzw. der Gasstrom G durchströmt zuerst das Filtermedium 2 um dann über eine erste Filterschicht mit Kapillar-Effekt 3 durch den Feinfilter 4 zu strömen. In Strömungsrichtung außen der Anordnung ist wieder eine Schicht mit Kapillar-Effekt 3 angeordnet, durch die der nun gereinigte Gasstrom den Filtereinsatz 1 verlässt.
Der Gasstrom G strömt zentral von oben in den Filtereinsatz 1 ein. Der einströmende Gasstrom G wird zunächst im Filtermedium 2 von größeren Flüssigkeitströpfchen befreit. In weiterer Folge erfolgt die Feinabscheidung im Feinfilter 4. Der Gasstrom G verlässt nach Durchtritt durch die letzte Filterschicht den Filtereinsatz 1.

Natürlich ist im Betrieb der Filtereinsatz 1 von einem Gehäuse umgeben, welches den Gasstrom G zentral und vorzugsweise von oben in das Filterelement 1 treten lässt, und an der Unterseite einen Ölabfluss aufweist. Das Gehäuse ist der Übersichtlichkeit halber nicht eingezeichnet. Die Gestaltung eines solchen Gehäuses ist dem Fachmann überaus geläufig und erlaubt das Einsetzen und Auswechseln eines Filtereinsatzes 1.

Der Übersichtlichkeit halber sind die einzelne Schichten des Medienpaket M beabstandet gezeichnet. In Realität sind diese dicht gepackt, beispielsweise gewickelt. Somit wird auch verständlich, dass durch den Abschnitt, der frei von Feinfilter 4 ist (es ist dies die Länge H_{free} minus H_{P}) kein Bypass für den Gasstrom G entsteht. Vielmehr tritt der Gasstrom G durch den Feinfilter 4.

Es hat sich als für die Funktion wesentlich herausgestellt, dass wenigstens eine Filterschicht mit Kapillar-Effekt 3 vor und nach der Passage P vorgesehen ist.

Die Flüssigkeit O fließt durch die Schwerkraft in oder an dem Medienpaket M in Richtung Boden 5 des Filtereinsatzes 1 und fließt über den Rand R ab (durch einen Pfeil beim Rand R deutlich gemacht). Der massenmäßig größte Anteil an Flüssigkeitsabscheidung geschieht dabei an der zuerst vom Gasstrom angeströmten Fläche des Medienpakets M, die hier durch ein Filtermedium zur Flüssigkeitsabscheidung 2, vorzugsweise ein Grobfilter, gebildet ist.

Die in diesem Ausführungsbeispiel zylinderringförmig ausgebildeten Filtermedien 2, 3 und 4 sind durch eine Kleberschicht K mit der Höhe H_{K} mit dem Boden 5 verbunden. Der Boden 5 ist meist als tiefgezogenes Blech ausgeführt, wobei ein Rand R ausgebildet ist. Im Betrieb sammelt sich die Flüssigkeit O am Boden 5, es entsteht also ein Flüssigkeitspegel. Die Höhe des Randes R gibt vor, welche Höhe der Flüssigkeitspegel im Betrieb im Filterelement erreicht. Flüssigkeit O fließt in diesem Ausführungsbeispiel radial aus dem Filtereinsatz ab. Die Höhe des Randes R gibt also die Höhe des Spiegels des Flüssigkeitspegels bei stationären Betriebsbedingungen vor.

Im Ausführungsbeispiel gemäß Figur 1 ist die Höhe des Randes R so gewählt, dass der Feinfilter 4 im Betrieb nicht in den Flüssigkeitspegel ragt, also von diesem beabstandet ist.

Somit ergibt sich im Betrieb des Filterelements 1 eine Passage P mit der Höhe H_{P}, die einen gegenüber dem Stand der Technik deutlich verbesserten Flüssigkeitsabfluss erlaubt, da die abgeschiedene Flüssigkeit nicht durch den Feinfilter 4 fließen muss.

Das Filtermedium mit Kapillareffekt 3 bewirkt, dass die Passage P stromabwärts des Feinfilters 4 gasdicht verschlossen ist. Damit kann kein Gas des Gasstromes G das Filterelement 1 verlassen, ohne zuvor durch den Feinfilter 4 getreten zu sein. Die Höhe H_{C} bezeichnet jene Länge, über die die Filtermedien mit Kapillareffekt 3 von Flüssigkeit getränkt und dadurch gasdicht sind. Wie weiter oben in der Beschreibung erläutert, ist H_{C} die Steighöhe der Flüssigkeit durch den Kapillareffekt im Medium 3.

Die Höhe H_{free} bezeichnet jene Höhe, die zwischen der Kleberschicht K und dem Feinfilter 4 liegt.

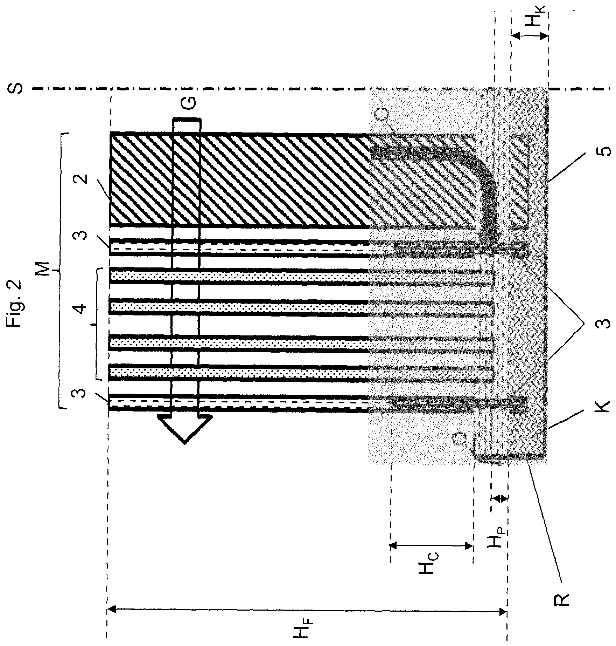

Im Ausführungsbeispiel gemäß Figur 2 ist der Rand R des Bodens 5 bzw. die Länge des Feinfilters 4 so eingerichtet, dass im Betrieb des Filtereinsatzes 1 der Feinfilter 4 bis in den Flüssigkeitspegel reicht. Die Höhe des Flüssigkeitspegels ist durch die Höhe des Randes R vorgegeben. Die Höhe der Passage H_{P} ist dann um die Eintauchtiefe von Feinfilter 4 in den Flüssigkeitspegel gegenüber dem Ausführungsbeispiel gemäß Figur 1 reduziert.

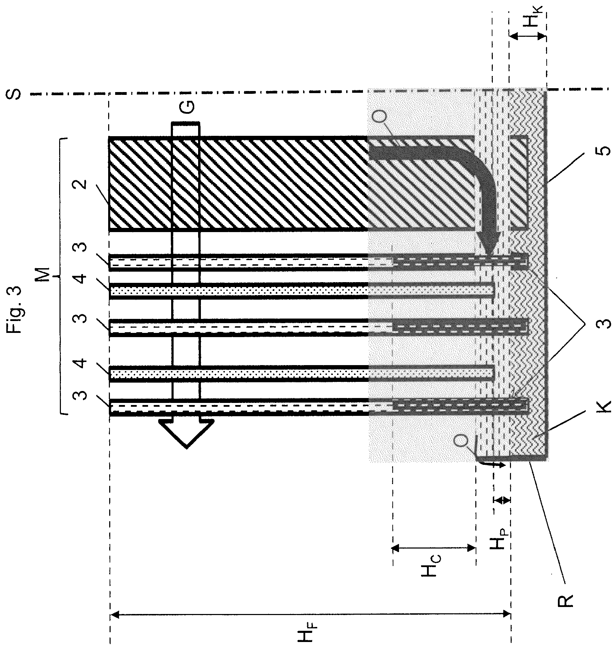

Im Ausführungsbeispiel gemäß Figur 3 ist innerhalb der Lagen von Feinfilter 4 eine weitere Lage an Filtermedium mit Kapillareffekt 3 vorgesehen. Dadurch wird der Gasstrom auch innerhalb des Medienpakets - durch die gasdichte Barriere des getränkten Abschnittes des Filtermediums mit Kapillareffekt 3 - umgelenkt und muss durch den Feinfilter 4 treten. Dies kann natürlich wiederholt werden, d.h. es können innerhalb des Medienpakets mehreren Lagen von Filtermedium mit Kapillareffekt 3 vorgesehen sein.

In den Figuren ist im Medienpaket M jeweils wenigstens ein Feinfilter 4 gezeigt. Die Erfindung ist nicht darauf beschränkt, dass das Medienpaket M ein Filtermedium 4 zur Feinabscheidung aufweist und die Passage P durch einen Feinfilter-freien Abschnitt gebildet wird. Es kann vielmehr vorgesehen sein, dass innerhalb des Medienpakets M eine Passage P realisiert ist, etwa mittels Durchbrüchen oder Kanälen innerhalb des Medienpakets M. Diese Durchbrüche oder Kanäle sind dann vorzugsweise im unteren Bereich des Medienpakets M eingerichtet.

In den Figuren ist jeweils lediglich eine Abfolge von Filtermedium 4 zur Feinabscheidung und Filtermedium mit Kapillar-Effekt 3 gezeigt. Die Anordnung kann natürlich wiederholt werden. Es können also mehrere Abfolgen von Feinfiltern 4 und Filterschichten mit Kapillar-Effekt 3 vorgesehen sein.
Auch kann vorgesehen sein, dass die Passage P nicht über den gesamten Winkelbereich von 360° ausgebildet ist, sondern nur in Segmenten davon.

Die Passage P kann in der Praxis auch so realisiert werden, dass die Kleberschicht K am Boden 5 in vorzugsweise konzentrischen, kreisringförmigen Raupen ausgebildet ist. Dadurch wird erreicht, dass zwischen den Kleberraupen keine Verbindung des jeweiligen Filtermediums mit dem Boden 5 besteht, so dass dadurch eine Passage P realisiert ist.

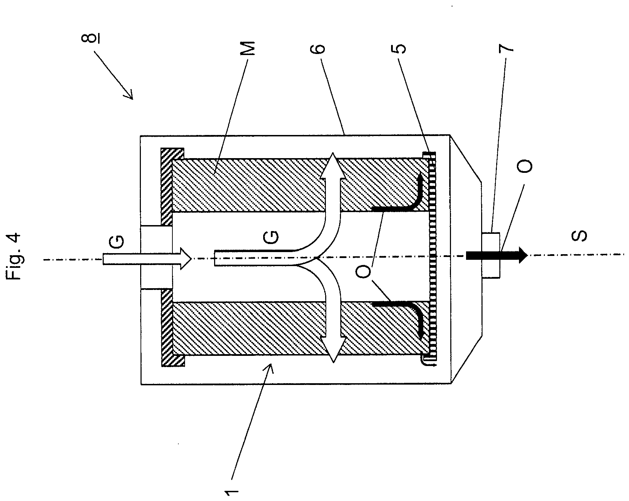

Figur 4 zeigt eine Filtereinrichtung 8, in der ein Filterelement 1 angeordnet ist. In der hier gezeigten Bauweise strömt das Gas G mittig von oben in die Filtereinrichtung 8 ein und durchströmt das Filterelement 1 von innen nach außen. Die Flüssigkeit O wird am Medienpaket M abgeschieden und fließt durch die Schwerkraft nach unten. Es fließt in radialer Richtung nach außen über den Boden 5 und verlässt das Gehäuse 6 über einen Flüssigkeitsabfluss 7.

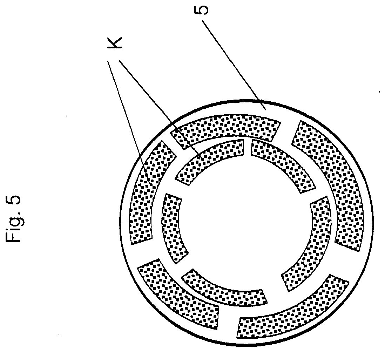

Figur 5 zeigt in einer Draufsicht schematisch den Boden 5 eines Filterelementes 1, wobei in dieser Ausführungsform die Kleberschicht K in Form von umfänglich nicht geschlossenen Raupen aufgebracht ist, sodass das Medienpaket M (hier nicht gezeigt) nicht vollflächig mit dem Boden 5 verbunden ist. Auch auf diese Weise kann eine Passage P zum Abfließen von Flüssigkeit O geschaffen werden.

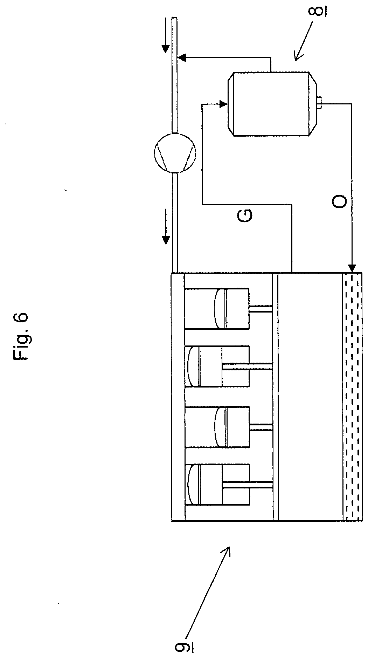

Figur 6 zeigt eine Brennkraftmaschine 9 mit einer Filtereinrichtung 8. Die Verschaltung einer Filtereinrichtung 8 zum Abscheiden Flüssigkeit O aus dem Gas G ist dem Fachmann geläufig und braucht an dieser Stelle nicht näher erläutert werden.

### Liste der verwendeten Bezugszeichen:

- 1: Filterelement
- 2: Filtermedium zur Flüssigkeitsabscheidung
- 3: Filtermedium mit Kapillareffekt
- 4: Filtermedium zur Feinabscheidung
- 5: Boden
- 6: Gehäuse
- 7: Ölabfluss
- 8: Filtereinrichtung
- 9: Brennkraftmaschine
- G: Gas, Gasstrom
- K: Kleberschicht
- O: Flüssigkeit
- P: Passage
- R: Rand
- S: Symmetrieachse

## Patentansprüche

1. Filtereinsatz (1) zur Abscheidung von Flüssigkeitströpfchen aus einem Gasstrom (G) umfassend:
- ein Medienpaket (M), bestehend aus Lagen an Filtermedien (2, 3 und 4), wobei im Betrieb ein zu reinigender Gasstrom (G) durch das Medienpaket (M) tritt,
- einen Boden (5), welcher, bezogen auf eine Abflussrichtung einer vom Gasstrom (G) abgeschiedenen Flüssigkeit (O), im unteren Bereich des Filtereinsatzes (1) angeordnet ist,
**dadurch gekennzeichnet, dass** zwischen einem Filtermedium (4) zur Feinabscheidung des Medienpakets (M) und dem Boden (5), oder innerhalb des Medienpakets (M) eine sich über den Radius des Filtereinsatzes (1) erstreckende Passage (P) für die Flüssigkeit (O) vorgesehen ist, **dadurch gekennzeichnet, dass** das Medienpaket (M) wenigstens eine Schicht mit Kapillareffekt (3) vor und nach der Passage (P) aufweist und die Schicht mit Kapillareffekt (3) jeweils so ausgebildet ist, dass diese im Betrieb das Medienpaket (M), vorzugsweise auf der Anström- und Abströmseite des Gases (G), durch den Kapillareffekt abschnittsweise gasdicht verschließt.

2. Filtereinsatz (1) nach Anspruch 1, **dadurch gekennzeichnet, dass** das Medienpaket (M) wenigstens einen Feinfilter (4) beinhaltet.

3. Filtereinsatz (1) nach Anspruch 1, **dadurch gekennzeichnet, dass** die Passage (P) weitgehend oder vollständig frei von Feinfilter (4) ist.

4. Filtereinsatz nach einem der vorangegangenen Ansprüche, **dadurch gekennzeichnet, dass** das Filtermedium (3) eine Steighöhe (Hc) der Kapillarwirkung von 2 bis 10 cm, vorzugsweise 2 bis 5 cm aufweist.

5. Filtereinsatz (1) nach wenigstens einem der vorangegangenen Ansprüche, **dadurch gekennzeichnet, dass** mehrere Lagen an Filtermedium (3) innerhalb des Medienpaketes (M), insbesondere innerhalb der Anordnung an Filtermedium (4) sowie in Strömungsrichtung des Gasstromes (G) vor und nach der Anordnung an Filtermedium (4) angeordnet sind.

6. Filtereinsatz (1) nach einem der vorangegangenen Ansprüche, **dadurch gekennzeichnet, dass** die Passage (P) eine Höhe in einem Bereich geringer als 0,5 % bis 2 % der Höhe des Filtereinsatzes (1) aufweist.

7. Filtereinsatz (1) nach einem der vorangegangenen Ansprüche, **dadurch gekennzeichnet, dass** die Passage eine Höhe von 5 mm bis 20 mm aufweist.

8. Filtereinsatz (1) nach einem der vorangegangenen Ansprüche, **dadurch gekennzeichnet, dass** der Filtereinsatz (1) eine zylinderförmige Grundform aufweist und das Medienpaket (M) aus vorzugsweise gewickelten Lagen von Filtermedien (2, 3 und 4) besteht.

9. Filtereinsatz (1) nach einem der Ansprüche 1 bis 7, **dadurch gekennzeichnet, dass** der Filtereinsatz (1) eine quaderförmige Grundform aufweist und das Medienpaket (M) aus geschichteten Lagen von Filtermedien (2, 3 und 4) besteht.

10. Filtereinrichtung (8) mit einem Filtereinsatz (1) nach einem der vorangegangenen Ansprüche.

11. Filtereinrichtung (8) mit einem Filtereinsatz (1) nach einem der vorangegangenen Ansprüche, **dadurch gekennzeichnet, dass** die Höhe der Passage P (Hp) kleiner ist als die Höhe eines Randes (R) abzüglich der Höhe eines Klebers (Hk), (Hr - Hk).

12. Filtereinrichtung (8) mit einem Filtereinsatz (1) nach einem der vorangegangenen Ansprüche, **dadurch gekennzeichnet, dass** die Passage P durch eine Anordnung des Klebers (K) und / oder eine Form des Bodens (5) mit Vertiefungen im Bereich des Filtermediums (4) ausgebildet ist.

13. Verwendung einer Filtereinrichtung (8) nach Anspruch 10 für eine Brennkraftmaschine.

## Claims

1. A filter insert (1) for the separation of liquid droplets from a gas flow (G) including:
- a media packet (M) comprising layer portions of filter media (2, 3 and 4), wherein in operation a gas flow (G) to be cleaned passes through the media packet (M), and
- a bottom (5) which is arranged in the lower region of the filter insert (1) in relation to a discharge flow direction of a liquid (O) separated from the gas flow (G),
**characterised in that** a passage (P) for the liquid (O), that extends over the radius of the filter insert (1), is provided between a filter medium (4) for fine separation of the media packet (M) and the bottom (5), or within the media packet (M), **characterized in that** the media packet (M) has at least one layer with a capillary effect (3) before and after the passage (P) and wherein each layer with a capillary effect (3) is such that in operation it portion-wise gas-tightly closes the media packet (M), preferably on the afflux flow side and the discharge flow side of the gas (G), by the capillary effect.

2. A filter insert (1) as set forth in claim 1 **characterised in that** the media packet (M) includes at least one fine filter (4).

3. A filter insert (1) as set forth in claim 1 **characterised in that** the passage (P) is substantially or completely free from fine filter (4).

4. A filter insert as set forth in claim 3 **characterised in that** the filter medium (3) has a rise height (He) in respect of the capillary action of between 2 and 10 cm, preferably between 2 and 5 cm.

5. A filter insert (1) as set forth in at least one of the preceding claims **characterised in that** a plurality of layer portions of filter medium (3) are arranged within the media packet (M), in particular within the arrangement of filter medium (4) and before and after the arrangement of filter medium (4) in the flow direction of the gas flow (G).

6. A filter insert (1) as set forth in one of the preceding claims **characterised in that** the passage (P) is of a height in a range of less than between 0.5% and 2% of the height of the filter insert (1).

7. A filter insert (1) as set forth in one of the preceding claims **characterised in that** the passage is of a height of between 5 mm and 20 mm.

8. A filter insert (1) as set forth in one of the preceding claims **characterised in that** the filter insert (1) is of a cylindrical basic shape and the media packet (M) comprises preferably wound layer portions of filter media (2, 3 and 4).

9. A filter insert (1) as set forth in one of claims 1 through 7 **characterised in that** the filter insert (1) is of a cuboidal basic shape and the media packet (M) comprises layered layer portions of filter media (2, 3 and 4).

10. A filter device (8) having a filter insert (1) as set forth in one of the preceding claims.

11. A filter device (8) having a filter insert (1) as set forth in one of the preceding claims wherein the height of the passage P (Hp) is less than the height (R) of the edge less the height (Hk) of an adhesive (Hr - Hk).

12. A filter device (8) having a filter insert (1) as set forth in one of the preceding claims wherein the passage (P) is provided by an arrangement of the adhesive (K) and/or a form of the bottom (5) with depressions in the region of the filter medium (4).

13. An internal combustion engine (9) having a filter device (8) as set forth in claim 10.

## Revendications

1. Insert de filtre (1) pour la séparation de gouttelettes de liquide d'un courant de gaz (G) comprenant :
- un paquet de milieu (M) se composant de couches de milieux de filtre (2, 3 et 4), dans lequel entre en fonctionnement un courant de gaz (G) à nettoyer par le paquet de milieu (M),
- un fond (5) qui est agencé par rapport à un sens d'écoulement d'un liquide (O) séparé du courant de gaz (G), dans la zone inférieure de l'insert de filtre (1),
**caractérisé en ce qu'**un passage (P) s'étendant sur le rayon de l'insert de filtre (1) pour le liquide (O) est prévu entre un milieu de filtre (4) pour la séparation fine du paquet de milieu (M) et le fond (5), ou dans le paquet de milieu (M), **caractérisé en ce que** le paquet de milieu (M) présente au moins une couche avec effet capillaire (3) avant et après le passage (P) et la couche avec effet capillaire (3) est respectivement réalisée de sorte que celle-ci ferme par section de manière étanche au gaz en fonctionnement le paquet de milieu (M), de préférence sur le côté afflux ou écoulement du gaz (G), par l'effet capillaire.

2. Insert de filtre (1) selon la revendication 1, **caractérisé en ce que** le paquet de milieu (M) contient au moins un filtre fin (4).

3. Insert de filtre (1) selon la revendication 1, **caractérisé en ce que** le passage (P) est largement ou complètement exempt de filtre fin (4).

4. Insert de filtre selon l'une des revendications précédentes, **caractérisé en ce que** le milieu de filtre (3) présente une hauteur de remontée (Hc) de l'action capillaire de 2 à 10 cm, de préférence de 2 à 5 cm.

5. Insert de filtre (1) selon au moins l'une des revendications précédentes, **caractérisé en ce que** plusieurs couches de milieu de filtre (3) sont agencées dans le paquet de milieu (M), en particulier dans l'agencement de milieu de filtre (4) ainsi que dans le sens d'écoulement du courant de gaz (G) avant et après l'agencement de milieu de filtre (4).

6. Insert de filtre (1) selon l'une des revendications précédentes, **caractérisé en ce que** le passage (P) présente une hauteur dans une plage inférieure à 0,5 à 2 % de la hauteur de l'insert de filtre (1).

7. Insert de filtre (1) selon l'une des revendications précédentes, **caractérisé en ce que** le passage présente une hauteur de 5 à 20 mm.

8. Insert de filtre (1) selon l'une des revendications précédentes, **caractérisé en ce que** l'insert de filtre (1) présente une forme de base cylindrique et le paquet de milieu (M) est constitué de couches de préférence enroulées de milieux de filtre (2, 3 et 4).

9. Insert de filtre (1) selon l'une des revendications 1 à 7, **caractérisé en ce que** l'insert de filtre (1) présente une forme de base parallélépipédique et le paquet de milieu (LM) est constitué de couches empilées de milieux de filtre (2, 3 et 4).

10. Dispositif de filtre (8) avec un insert de filtre (1) selon l'une des revendications précédentes.

11. Dispositif de filtre (8) avec un insert de filtre (1) selon l'une des revendications précédentes, **caractérisé en ce que** la hauteur du passage P (Hp) est inférieure à la hauteur d'un bord (R) moins la hauteur d'une colle (Hk), (Hr-Hk).

12. Dispositif de filtre (8) avec un insert de filtre (1) selon l'une des revendications précédentes, **caractérisé en ce que** le passage P est réalisé par un agencement de la colle (K) et/ou une forme du fond (5) avec des cavités dans la zone du milieu de filtre (4).

13. Utilisation d'un dispositif de filtre (8) selon la revendication 10 pour un moteur à combustion interne.
